# EUROPÄISCHE PATENTSCHRIFT

(11) **EP 4 107 048 B1**
(45) Veröffentlichungstag und Bekanntmachung des Hinweises auf die Patenterteilung: **15.11.2023**
(21) Anmeldenummer: 21707174.5
(22) Anmeldetag: 16.02.2021
(51) Int. Cl.: B62D 1/181, F16H 25/20

(54) **VERSTELLANTRIEB FÜR EINE LENKSÄULE UND MOTORISCH VERSTELLBARE LENKSÄULE FÜR EIN KRAFTFAHRZEUG**
ADJUSTMENT DRIVE FOR A STEERING COLUMN AND MOTOR-ADJUSTABLE STEERING COLUMN FOR A MOTOR VEHICLE
COMMANDE DE RÉGLAGE CONÇUE POUR UNE COLONNE DE DIRECTION, ET COLONNE DE DIRECTION RÉGLABLE PAR MOTEUR POUR UN VÉHICULE AUTOMOBILE

(30) Priorität: 20.02.2020 DE 102020202219
(43) Veröffentlichungstag der Anmeldung: 28.12.2022
(73) Patentinhaber: thyssenkrupp Presta AG, 9492 Eschen (LI); thyssenkrupp AG, 45143 Essen (DE)
(72) Erfinder: SPECHT, Jean-pierre, 9469 Haag (CH); HUBER, Sebastian, 6811 Göfis (AT)
(74) Vertreter: thyssenkrupp Intellectual Property GmbH
(86) Internationale Anmeldenummer: PCT/EP2021/053693
(87) Internationale Veröffentlichungsnummer: WO 2021/165217

(56) Entgegenhaltungen:
- CN-U- 209 395 858
- DE-A1-102017 207 561
- DE-B3-102014 103 028

## Beschreibung

### Stand der Technik

Die Erfindung betrifft einen Verstellantrieb für eine Lenksäule für ein Kraftfahrzeug, umfassend eine in Richtung einer Spindelachse axial längs erstreckte Gewindespindel, die in eine Spindelmutter eingreift, und eine Antriebseinheit, die mit der Gewindespindel oder der Spindelmutter derart gekoppelt ist, dass die Gewindespindel und die Spindelmutter relativ zueinander drehend antreibbar sind, wobei eine Anschlagvorrichtung zur Begrenzung einer axialen Bewegung der Spindelmutter relativ zur Gewindespindel mindestens eine in axialer Richtung an der Gewindespindel abgestützte Anschlagfläche aufweist, und eine axial dagegen gerichtete, an der Spindelmutter abgestützte Gegenfläche. Eine Lenksäule mit mindestens einem derartigen Verstellantrieb ist ebenfalls Gegenstand der Erfindung.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Manteleinheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Gewindespindelachse oder kurz Spindelachse, drehend antreibbar, wodurch die Gewindespindel und die Spindelmutter je nach Drehrichtung in Richtung der Gewindespindelachse translatorisch aufeinander zu oder voneinander weg bewegt werden können. In einer Ausführungsform ist die Gewindespindel von der Antriebseinheit, die feststehend mit der Stelleinheit oder der Trageinheit verbunden ist, um ihre Spindelachse drehend antreibbar und greift in die Spindelmutter ein, die an der Trageinheit oder alternativ an der Stelleinheit bezüglich Drehung um die Gewindespindelachse feststehend angebracht ist. In Richtung der Spindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Spindelachse bewirkt. Diese Ausführung wird daher auch als Rotationsspindelantrieb bezeichnet.

In einer alternativen Ausführungsform ist die Gewindespindel bezüglich Drehung um ihre Spindelachse unverdrehbar mit der Trageinheit oder alternativ mit der Stelleinheit gekoppelt und die Spindelmutter ist drehbar, aber in Richtung der Spindelachse feststehend entsprechend an der Stelleinheit oder alternativ an der Trageinheit gelagert. Wie in der ersten Ausführungsform stützt sich die Gewindespindel an der Trageinheit oder an der Stelleinheit ab, und die Spindelmutter entsprechend an der Stelleinheit oder an der Trageinheit, so dass die Gewindespindel in Richtung der Spindelachse translatorisch verschiebbar ist, indem die Spindelmutter von der Antriebseinheit um die Spindelachse drehend angetrieben wird. Diese Ausführung wird auch als Tauchspindelantrieb bezeichnet.

Durch den rotatorischen Antrieb der Gewindespindel wird wie bei der ersten Alternative eine translatorische Verstellung von Trageinheit und Stelleinheit relativ zueinander in Richtung der Spindelachse bewirkt. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann, wobei die Gewindespindel und die Spindelmutter relativ zueinander (rotatorisch und translatorisch) motorisch bewegbar sind.

Zur Realisierung einer Längsverstellung der Stelleinheit in Richtung der Längsachse der Lenkspindel kann ein Spindeltrieb eines Verstellantriebs zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Spindelachse im Wesentlichen parallel zur Längsachse ausgerichtet sein kann. Zur Höhenverstellung kann ein Spindeltrieb zwischen der Trageinheit und einer daran höhenverschwenkbar gelagerten Stelleinheit oder Manteleinheit, in der die Stelleinheit aufgenommen ist, angeordnet sein. An einer Lenksäule können eine motorische Längs- und Höhenverstellung einzeln oder in Kombination ausgebildet sein.

Eine derartige Lenksäule ist beispielsweise aus der DE 10 2017 207561 A1 bekannt. Der lineare Verstellweg wird axial, in Richtung der Spindelachse durch eine Anschlagvorrichtung begrenzt. Diese sieht vor, dass die Spindelmutter mit einer axialen, stirnseitigen Gegenfläche gegen eine korrespondierende, axial bezüglich der Gewindespindel fixierte Anschlagfläche in einer Anschlagposition anschlägt. Eine erste Anschlagfläche kann bei einem Tauchspindelantrieb wie in der genannten DE 10 2017 207561 A1 an einem an der Gewindespindel fixierten Anschlagkörper ausgebildet sein, und eine zweite Anschlagfläche am anderen Ende der Gewindespindel ebenfalls an einem dort angebrachten Anschlagkörper. Damit korrespondierend hat die Spindelmutter auf beiden Stirnseiten Gegenflächen, welche in Anschlagposition axial gegen korrespondierende Anschlagflächen anschlagen. Bei einem Rotationsspindelantrieb kann bevorzugt eine Anschlagfläche am freien Ende der Gewindespindel angeordnet sein, und die andere Anschlagfläche ebenfalls am anderen Ende der Gewindespindel oder am Spindelantrieb, beispielsweise am Getriebegehäuse der Antriebseinheit.

Beim Anschlag wird Gegenfläche die Spindelmutter axial mit der von der Antriebseinheit aufgebrachten Verstellkraft gegen die jeweilige Anschlagfläche verspannt. Um die Spindelmutter wieder aus dieser Anschlagposition heraus zu bewegen, müssen die Anschlagfläche und die Gegenfläche durch entgegengesetzten Antrieb voneinander gelöst werden. Das dazu erforderliche Lösemoment wird bestimmt durch die momentane Antriebsleistung beim Anschlag, die Gewindesteigung der Gewindespindel und die Haftreibung zwischen Anschlag- und Gegenfläche. Wenn die Lenksäule beispielsweise nach einer Fahrt beim Abstellen des Fahrzeugs in eine Endposition verstellt wird, um ein komfortables Aus- und Einsteigen zu ermöglichen, steht im elektrischen Bordnetz des Fahrzeugs die volle Versorgungsspannung zur Verfügung, und die Antriebseinheit bewegt den Spindeltrieb mit voller Antriebsleistung und entsprechend hoher Verstellkraft gegen den Anschlag. Durch die flache Gewindesteigung erfolgt eine relativ feste Verspannung von Anschlag- und Gegenfläche, und bereits durch die in Umfangsrichtung wirkende Haftreibung ist ein relativ hohes Lösemoment erforderlich, um die Lenksäule bei der erneuten Inbetriebnahme aus der Endposition heraus wieder in eine Betriebsposition zu verstellen. Entsprechend muss von der Antriebseinheit eine relativ hohe Antriebsleistung zur Verfügung gestellt werden, die höher ist als zur normalen Positionsverstellung erforderlich. Nachteilig ist dabei, dass die Antriebseinheit entsprechend leistungsstark und groß dimensioniert werden muss. Ein weiteres Problem kann insbesondere nach längerer Standzeit auftreten, beispielsweise wenn das Fahrzeug über Nacht abgestellt wird und abkühlt. Dann kann die Versorgungsspannung im Bordnetz absinken, und zusätzlich kann die Haftreibung durch thermische Effekte erhöht sein, so dass die Antriebseinheit kein zum Lösen des Verstellantriebs erforderliches Antriebsmoment bereitstellen kann. Der resultierende Ausfall der Lenksäule stellt eine schwerwiegende Fehlfunktion dar, die auf jeden Fall zu vermeiden ist.

Ein Verstellantrieb der eingangs genannten Art ist ebenfalls aus der CN 209395858 U bekannt.

Angesichts der vorangehend erläuterten Problematik ist es eine Aufgabe der vorliegenden Erfindung, einen Verstellantrieb mit einem verbesserten Anschlagverhalten anzugeben, sowie eine verbesserte verstellbare Lenksäule.

### Darstellung der Erfindung

Diese Aufgabe wird erfindungsgemäß gelöst durch den Verstellantrieb mit den Merkmalen des Anspruchs 1 und die Lenksäule gemäß Anspruch 13. Vorteilhafte Weiterbildungen ergeben sich aus den Unteransprüchen.

Bei einem Verstellantrieb für eine Lenksäule für ein Kraftfahrzeug, umfassend eine in Richtung einer Spindelachse axial längs erstreckte Gewindespindel, die in eine Spindelmutter eingreift, und eine Antriebseinheit, die mit der Gewindespindel oder der Spindelmutter derart gekoppelt ist, dass die Gewindespindel und die Spindelmutter relativ zueinander drehend antreibbar sind, wobei eine Anschlagvorrichtung zur Begrenzung einer axialen Bewegung der Spindelmutter relativ zur Gewindespindel mindestens eine in axialer Richtung an der Gewindespindel abgestützte Anschlagfläche aufweist, und eine axial dagegen gerichtete, an der Spindelmutter abgestützte Gegenfläche, ist erfindungsgemäß vorgesehen, dass die Anschlagvorrichtung eine Abrückvorrichtung aufweist, wobei die Abrückvorrichtung die Anschlagfläche aufweist, die über die Abrückvorrichtung in axialer Richtung verstellbar gegen die Gewindespindel abgestützt ist, und/oder die Abrückvorrichtung die Gegenfläche aufweist, die über die Abrückvorrichtung in axialer Richtung verstellbar gegen die Spindelmutter abgestützt ist.

Erfindungsgemäß weist die Anschlagvorrichtung eine Abrückvorrichtung auf, die im Bereich der Anschlagposition zwischen der Spindelmutter und der Gewindespindel angeordnet ist. Konkret kann eine derartige Abrückvorrichtung, die gleichbedeutend auch als Rückhubvorrichtung oder Rückzugvorrichtung bezeichnet werden kann, in zwei Konfigurationen der Erfindung an der Spindelmutter oder der Gewindespindel angeordnet und axial abgestützt sein.

Bei einer Anordnung an der Gewindespindel kann die Abrückvorrichtung derart angebracht sein, dass sie sich auf ihrer der Spindelmutter abgewandten Seite axial an der Gewindespindel abstützt, vorzugsweise gegen ein axial an der Gewindespindel fixiertes Stützelement. Auf ihrer der Spindelmutter zugewandten Seite weist die Abrückvorrichtung eine Anschlagfläche auf. Mit anderen Worten befindet sich die Abrückvorrichtung zwischen der Anschlagfläche und der Gewindespindel. Im Unterschied dazu ist im Stand der Technik die Anschlagfläche direkt an der Gewindespindel oder einem daran fixierten Stützelement ausgebildet.

Bei einer Anordnung an der Spindelmutter kann die Abrückvorrichtung derart angebracht sein, dass sie sich mit einer Seite axial gegen die Spindelmutter abstützt, und auf ihrer der Spindelmutter abgewandten, gegen die Anschlagfläche gerichteten Seite die Gegenfläche aufweist. Mit anderen Worten befindet sich die Abrückvorrichtung zwischen der Gegenfläche und der Spindelmutter. Im Unterschied dazu ist im Stand der Technik die Gegenfläche direkt an der Stirnseite der Spindelmutter angeordnet.

Die Funktion der Abrückvorrichtung sieht vor, dass die daran ausgebildete Anschlagfläche in axialer Richtung relativ zur Gewindespindel bewegbar ist, wenn die Abrückvorrichtung an der Gewindespindel angebracht ist, oder die Gegenfläche in axialer Richtung relativ zur Spindelmutter bewegbar ist, wenn die Abrückvorrichtung an der Spindelmutter angebracht ist. Im Unterschied zum Stand der Technik, bei dem die Anschlag- und Gegenflächen axial starr an der Gewindespindel und der Spindelmutter festgelegt und positioniert und gegenüber dieser unverrückbar sind, ist es durch die erfindungsgemäße Abrückvorrichtung ermöglicht, die in Anschlagposition axial gegeneinander verspannten Anschlag- und Gegenflächen voneinander abzurücken, wobei sie axial auseinander bewegt werden. Das Abrücken bezeichnet eine lineare Relativbewegung zur Trennung von Anschlag- und Gegenfläche aus der Anschlagposition heraus, mit anderen Worten eine Relativbewegung, die das Lösen bewirkt oder zumindest unterstützt. Zum Abrücken kann die an der Abrückvorrichtung angeordnete Anschlag- oder Gegenfläche entgegen ihrer axial abstehenden Normalenrichtung relativ zur jeweils korrespondierenden Gegen- oder Anschlagfläche zurückbewegt werden. Anschlag- und Gegenfläche werden dabei durch den mittels der Abrückvorrichtung erzeugten Rückhub in axialer Richtung voneinander weg bewegt, oder zumindest wird die Verspannung aufgehoben oder zumindest entlastet. Nach dem Abrücken ist ein leichtgängiger Antrieb des Spindeltriebs mit normaler Antriebsleistung der Antriebseinheit ermöglicht.

Ein Vorteil der Erfindung ist, dass das Lösen von in der Anschlagposition fest miteinander verspannten Anschlag- und Gegenflächen nicht allein über die durch die Gewindesteigung des Spindelgewindes vorgegebene Relativbewegung zwischen Spindelmutter und Gewindespindel erfolgt, sondern durch die Abrückvorrichtung eine zusätzliche Relativbewegung erzeugt wird, welche die Relativbewegung des Spindeltriebs überlagert und die Trennung von Anschlag- und Gegenfläche bewirkt oder zumindest unterstützt, wodurch das Lösen optimiert werden kann. Dadurch ist es möglich, den Spindeltrieb mit einem geringeren Lösemoment aus der Anschlagposition heraus in Betriebsposition zu bringen. Insbesondere ist eine geringere Antriebsleistung der Antriebseinheit erforderlich, wodurch diese in vorteilhafter Weise kleiner dimensioniert werden kann. Außerdem ist auch unter ungünstigen Betriebsbedingungen, wenn die verfügbare Antriebsleistung verringert ist, beispielsweise aufgrund niedriger Versorgungsspannung, ein zuverlässiger Betrieb gewährleistet.

Es kann entweder mindestens eine erfindungsgemäße Abrückvorrichtung an der Gewindespindel, vorzugsweise in einem Endbereich, angebracht und axial abgestützt sein, vorzugsweise gegen ein Stützelement, welches an der Gewindespindel axial fixiert ist, beispielsweise durch eine unlösbare oder lösbare Verbindung. Zum Abrücken und Lösen von der Gegenfläche der Spindelmutter kann die Abrückvorrichtung relativ zum Stützelement axial verkürzt oder zusammengezogen werden, so dass die an der Abrückvorrichtung angeordnete, in ihrer Normalenrichtung gegen die Spindelmutter gerichtete Anschlagfläche von der Gegenfläche weg bewegt wird.

Es können beispielsweise zwei Abrückvorrichtungen an den beiden Enden der Gewindespindel angeordnet sein, bevorzugt bei einem Tauchspindelantrieb. Die Anschlagflächen sind dann gegen die dazwischen angeordnete Spindelmutter gerichtet. Alternativ kann eine Abrückvorrichtung auf einer Seite der Spindelmutter angeordnet sein, oder auch jeweils auf beiden Stirnseiten der Spindelmutter. Es ist ebenfalls denkbar und möglich, jeweils eine Abrückvorrichtung an der Gewindespindel und an der Spindelmutter vorzusehen. Es kann auch ausreichend sein, nur eine Abrückvorrichtung vorzusehen, um das Lösen aus einer vorgegebenen Endposition der Lenksäule zu erleichtern, beispielsweise einer maximal zusammengefahrenen Komfort- oder Verstauposition.

Es kann vorteilhaft sein, dass die Abrückvorrichtung ein Umlenkgetriebe aufweist. Das Umlenkgetriebe kann dazu eingerichtet sein, um eine in die Abrückvorrichtung eingeleitete Lösekraft oder ein Lösemoment umzusetzen in eine axiale Relativbewegung von Anschlag- und Gegenfläche. Dabei kann das Umlenkgetriebe zur Erzeugung und Einleitung der Lösekraft in die Anschlag- oder Gegenfläche angepasst und optimiert werden. Das Umlenkgetriebe kann alternativ auch als Umlenkeinrichtung bezeichnet werden.

Eine vorteilhafte Ausgestaltung ist, dass das Umlenkgetriebe ausgestaltet ist zur Umsetzung einer relativen Drehung der Anschlagfläche und/oder der Gegenfläche um die Spindelachse in eine axiale Abrückbewegung. Die Anschlag- und Gegenfläche können bevorzugt zur Spindelachse koaxiale Ringflächen aufweisen oder als solche ausgebildet sein. Wenn die Abrückvorrichtung an der Gewindespindel angebracht ist, kann die Anschlagfläche drehbar bezüglich der Gewindespindel gelagert und mit dem Umlenkgetriebe gekoppelt sein. Wenn die Abrückvorrichtung an der Spindelmutter angebracht ist, kann die Gegenfläche drehbar bezüglich der Spindelmutter gelagert und mit dem Umlenkgetriebe gekoppelt sein. Das Umlenkgetriebe kann eine Art Hubgetriebe aufweisen, welches eine Rotation einer Anschlag- oder Gegenfläche umsetzt in einen axialen Hub dieser Anschlag- oder Gegenfläche mit einer linearen Bewegungskomponente in axialer Richtung. Dieser Hub kann für als lineare Abrückbewegung genutzt werden. Ein derartiges Umlenk- oder Hubgetriebe kann beispielsweise miteinander korrespondierende, mittelbar oder unmittelbar axial gegeneinander anliegende Keilflächen, Nocken, Gewindeflächen, Wälzkörper und/oder Kippelemente aufweisen. Derartige Hubgetriebe zur Umsetzung einer Drehbewegung in eine axiale Bewegungskomponente sind in unterschiedlichen Ausführungen bekannt.

In einer vorteilhaften Weiterbildung weisen die Keilflächen eine Steigung auf, wobei die Steigung bevorzugt einen Wert zwischen 5% und 30% aufweist. Die Steigung ist der prozentuale Anteil des Hubes bezogen auf die Strecke der Keilfläche in Umfangsrichtung. Die Werte der Steigung der Keilflächen können konstant über die Strecke in Umfangsrichtung sein. Alternativ kann der Steigungswert auch über die Strecke in Umfangsrichtung unterschiedliche Werte annehmen. Beispielsweise kann die Steigung an einem umfangsseitigen Ende des Keils höher sein als die Steigung an dem anderen umfangsseitigen Ende des Keils.

Dadurch, dass die Anschlag- oder Gegenfläche mit dem Umlenkgetriebe der Abrückvorrichtung gekoppelt ist, wird in der Anschlagposition, wenn Anschlag- oder Gegenfläche reibschlüssig gegeneinander verspannt sind, das von der Antriebseinheit zum Antrieb in den Spindeltrieb eingeleitete Antriebsmoment gleichzeitig in das Umlenkgetriebe eingeleitet, und sorgt damit für eine selbsttätige Betätigung der Abrückvorrichtung, um das Lösen zu erzeugen oder zumindest zu begünstigen. Dadurch kann eine vorteilhafte und sichere Funktion ohne zusätzliche äußere Betätigung erzeugt werden.

Bevorzugt kann vorgesehen sein, dass das Umlenkgetriebe eine der Gewindesteigung der Gewindespindel entgegengesetzte Umlenkrichtung bezüglich der Umlenkung einer rotatorischen in eine lineare Bewegungsrichtung hat. Der Spindeltrieb kann ebenfalls als eine Art Hubgetriebe angesehen werden, welche bei einem als Rechtsgewinde ausgebildeten Spindelgewinde eine relative Rechtsdrehung der Spindelmutter in eine definitionsgemäß vorwärts gerichtete lineare (Hub-)Bewegung der Spindelmutter umsetzt. Dann setzt das erfindungsgemäße Umlenkgetriebe - wie bei einem Linksgewinde - eine Rechtsdrehung der Anschlag- oder Gegenfläche um in eine umgekehrte, rückwärts gerichtete lineare (Hub-)Bewegung dieser Anschlag- oder Gegenfläche. Beim Lösen aus der Anschlagposition werden Anschlag- und Gegenfläche durch die zwischen ihnen wirkende Haftreibung in dieselbe Drehrichtung verdreht, wodurch sich die linearen Bewegungen des Spindeltriebs und der Abrückvorrichtungen bezüglich der linearen Relativbewegung positiv überlagern. Im Ergebnis bewegen sich dadurch Anschlag- und Gegenfläche linear schneller auseinander, als die Spindelmutter relativ zur Gewindespindel verstellt wird. Dadurch die in Umfangsrichtung wirkende Reibung, welche durch das flache Spindelgewinde im Stand der Technik das Lösen erschwert, reduziert, und in vorteilhafter Weise ist ein geringeres Lösemoment erforderlich. Anders ausgedrückt wird durch die Überlagerung der linearen Bewegungskomponenten von Spindeltrieb und Abrückvorrichtung in der Anschlagposition eine lineare Relativbewegung erzeugt, welche eine größere Gewindesteigung der Gewindespindel simuliert, die eine geringere Neigung zum Festfressen am Anschlag hat als das tatsächliche flache Spindelgewinde, so dass ein einfacheres Lösen ermöglicht ist.

Eine vorteilhafte Ausführung der Erfindung sieht vor, dass die Abrückvorrichtung eine Anschlagscheibe und eine Stützscheibe aufweist, die relativ zur Spindelachse gegeneinander verdrehbar sind und miteinander zusammenwirkende Getriebemittel aufweisen. Die Anschlagscheibe weist je nach Anordnung der Abrückvorrichtung an der Gewindespindel oder der Spindelmutter die Anschlagfläche oder die Gegenfläche auf. Die Stützscheibe ist relativ zur Anschlagscheibe, und somit relativ zur Gewindespindel oder Spindelmutter axial und rotatorisch fixiert. Zwischen der Anschlag- und Stützscheibe ist durch die Getriebemittel ein Umlenkgetriebe gemäß der vorangehend erläuterten Funktion realisiert. Das Umlenkgetriebe ist als Hubgetriebe ausgebildet zur Umsetzung einer relativen Rotation von Stütz- und Anschlagscheibe in eine relative lineare Hubbewegung von Stütz- und Anschlagscheibe. Hierzu kann vorgesehen sein, dass die Anschlagscheibe und die Stützscheibe miteinander korrespondierende, jeweils mittelbar oder unmittelbar axial gegeneinander anliegende, Keilflächen, Nocken und/oder Gewindeflächen aufweisen. Diese an sich bekannten Getriebeelemente eines Hubgetriebes sind axial zwischen den bevorzugt als koaxiale Ringscheiben ausgebildeten Stütz- und Anschlagscheiben angeordnet und können einfach und robust realisiert werden. Die Keil- oder Gewindeflächen sind bevorzugt gegen Spindelachse geneigt, und zwar entgegen der Gewindesteigung der Gewindespindel.

In einer vorteilhaften Weiterbildung kann es vorgesehen sein, dass die Stützscheibe und/oder die Anschlagscheibe aus einem Kunststoff oder einem metallischen Werkstoff, wie Stahl oder Messing gebildet ist.

Zusätzlich oder alternativ kann vorgesehen sein, dass zwischen der Anschlagscheibe und der Stützscheibe Wälzkörper oder Kippelemente angeordnet sind. Als Kippelemente können beispielsweise sogenannte Kippstifte oder unrunde Wälzkörper eingesetzt werden, welche eine relative Drehung in einen relativen axialen Hub umsetzen. Wälzkörper können beispielsweise reibungsarm auf geneigten Laufbahnen an Anschlag- und Stützscheibe abrollen, und ermöglichen eine leichtgängige Abrückbewegung.

In einer vorteilhaften Ausführung kann vorgesehen sein, dass die Abrückvorrichtung eine Rückstellvorrichtung aufweist, welche die Anschlagfläche oder die Gegenfläche in einer definierten relativen Anschlagposition (Bereitschaftsposition) hält, und bei Abweichungen von der Anschlagposition eine auf die Anschlagposition gerichtete Rückstellkraft ausübt. Die Rückstellvorrichtung kann an der Anschlag- oder Gegenfläche angreifen. Bevorzugt kann die Rückstellvorrichtung wirkungsmäßig zwischen der Anschlagscheibe und der Stützscheibe angeordnet sein. Die Rückstellvorrichtung sorgt dafür, dass die Abrückvorrichtung außerhalb der Anschlagsituation, wenn die Anschlag- und Gegenfläche außer Kontakt stehen, in einer definierten Ruhe- oder Bereitschaftsposition gehalten wird. Dadurch kann insbesondere sichergestellt werden, dass das Umlenkgetriebe beim Erreichen der Anschlagposition sicher in einer relativen Stellung ist, welche die geforderte Ausführung der Abrückbewegung ermöglicht.

Bevorzugt weist die Rückstellvorrichtung elastische Mittel auf, beispielsweise mindestens ein Federelement. Das Federelement kann bevorzugt wirkungsmäßig zwischen Anschlag- und Stützscheibe angebracht sein zur Ausübung eines elastischen Rückstellmoments, wenn eine relative Verdrehung zwischen Anschlag- und Stützscheibe auftritt, wie beispielsweise in der verspannten Anschlagposition. Wird die Anschlagposition beim Lösen des Spindeltriebs verlassen, sorgt die Rückstellvorrichtung für ein elastisches Zurückfedern der Abrückvorrichtung in die Bereitschafts- oder Ruheposition, in der Anschlag- und Gegenfläche gegeneinander anschlagen können, wobei die volle erfindungsgemäße Funktionalität gewährleistet ist.

Das Federelement kann beispielsweise eine Federzunge oder dergleichen umfassen, die zwischen Anschlag- und Stützscheibe eingesetzt ist, derart, dass es bei einer relativen Verdrehung gespannt wird und ein der Verdrehung entgegengesetztes elastisches Rückstellmoment ausübt.

Es kann vorgesehen sein, dass die Anschlagfläche und/oder die Gegenfläche Reib- und/oder Formschlussmittel aufweisen. Durch die korrespondierenden Reib- und/oder Formschlussmittel kann eine verbesserte Drehmomentübertragung zwischen Anschlagfläche und Gegenfläche in Anschlagposition realisiert werden, beispielsweise durch eine reibungserhöhende Oberfläche, ineinander greifende Formschlusselemente und/oder eine Beschichtung oder dergleichen. Dadurch kann erreicht werden, dass beim Erreichen der Anschlagposition Anschlag- und Gegenfläche ohne nennenswerten Schlupf gemeinsam rotieren, und dass beim Lösen aus der Anschlagposition das Lösemoment sicher übertragen wird und eine optimale Betätigung des Umlenkgetriebes der Abrückvorrichtung erreicht werden kann.

Der Verstellantrieb kann als Rotationsspindelantrieb oder als Tauchspindelantrieb ausgebildet sein.

In der Ausführungsform als Rotationsspindelantrieb ist die Gewindespindel von der Antriebseinheit, die feststehend mit der Stelleinheit oder der Trageinheit verbindbar ist, um ihre Spindelachse drehend antreibbar und greift in die Spindelmutter ein, die an der Trageinheit oder alternativ an der Stelleinheit bezüglich Drehung um die Gewindespindelachse feststehend anbringbar ist.

In Richtung der Spindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Spindelachse bewirkt.

In einer alternativen Ausführungsform als Tauchspindelantrieb ist die Gewindespindel bezüglich Drehung um ihre Spindelachse unverdrehbar mit der Trageinheit oder alternativ mit der Stelleinheit koppelbar und die Spindelmutter ist drehbar, aber in Richtung der Spindelachse feststehend entsprechend an der Stelleinheit oder alternativ an der Trageinheit lagerbar.

Wie in der Ausführungsform des Rotationsspindelantriebs stützt sich die Gewindespindel an der Trageinheit oder an der Stelleinheit ab, und die Spindelmutter entsprechend an der Stelleinheit oder an der Trageinheit, so dass die Gewindespindel in Richtung der Spindelachse translatorisch verschiebbar ist, indem die Spindelmutter von der Antriebseinheit um die Spindelachse drehend angetrieben wird.

Die Erfindung betrifft weiterhin eine motorisch verstellbare Lenksäule für ein Kraftfahrzeug, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, umfassend eine in Richtung einer Spindelachse axial längs erstreckte Gewindespindel, die in eine Spindelmutter eingreift, und eine Antriebseinheit, die mit der Gewindespindel oder der Spindelmutter derart gekoppelt ist, dass die Gewindespindel und die Spindelmutter relativ zueinander drehend antreibbar sind, wobei eine Anschlagvorrichtung zur Begrenzung einer axialen Bewegung der Spindelmutter relativ zur Gewindespindel mindestens eine in axialer Richtung an der Gewindespindel abgestützte Anschlagfläche aufweist, und eine axial dagegen gerichtete, an der Spindelmutter abgestützte Gegenfläche, wobei erfindungsgemäß vorgesehen ist, dass der Verstellantrieb ausgebildet gemäß einer oder mehrerer der vorangehend beschriebenen Ausführungen.

Ein erfindungsgemäßer Verstellantrieb als Längsverstellantrieb und/oder als Höhenverstellantrieb vorgesehen sein. Dabei ist es möglich, dass die Lenksäule ausschließlich längsverstellbar oder höhenverstellbar ist, oder kombiniert längs- und höhenverstellbar. Bei einer längs- und höhenverstellbaren Lenksäule können beide oder auch nur einer der Verstellantriebe erfindungsgemäß ausgestaltet sein.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,

- Figur 2: eine weitere perspektivische Ansicht der erfindungsgemäßen Lenksäule gemäß Figur 1 aus einem anderen Betrachtungswinkel,
- Figur 3: eine schematische perspektivische Ansicht eines erfindungsgemäßen Verstellantriebs,
- Figur 4: eine vergrößerte Detailansicht einer Anschlagvorrichtung gemäß Figur 3,
- Figur 5: eine erfindungsgemäße Anschlagvorrichtung in einer schematisch auseinander gezogenen Ansicht,
- Figur 6: eine Seitenansicht des Verstellantriebs gemäß Figur 3,
- Figur 7: eine vergrößerte Detailansicht von Figur 6 in einem ersten Verstellzustand außerhalb einer Anschlagposition,
- Figur 8: eine Ansicht wie in Figur 7 in Anschlagposition.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

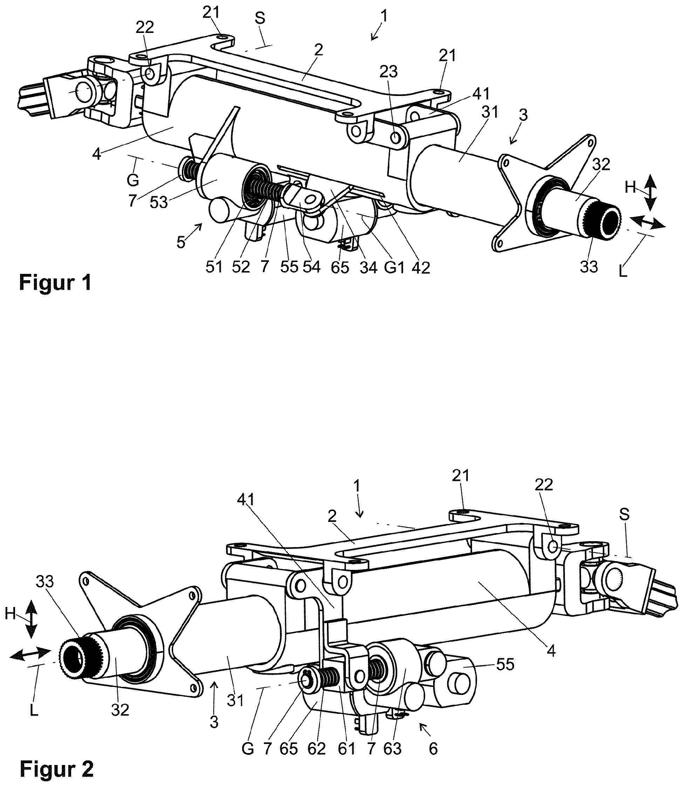

Figur 1 zeigt eine erfindungsgemäße Lenksäule 1 in einer schematischen perspektivischen Ansicht von oben rechts schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite, also von oben rechts gesehen.

Die Lenksäule 1 umfasst eine Trageinheit 2, welche als Konsole ausgebildet ist, die Befestigungsmittel 21 in Form von Befestigungsbohrungen aufweist, zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet -aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen Stellhebel 41 mit der Trageinheit 2 verbunden. Durch eine Drehbewegung des Stellhebels 41 mittels eines dargestellten Verstellantriebs 6 (siehe Figur 2) kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Ein erster Verstellantrieb 5 zur Längsverstellung der Stelleinheit 3 relativ zur Manteleinheit 4 in Richtung der Längsachse L weist einen Spindeltrieb mit einer Spindelmutter 51 auf, in die eine längs ihrer Spindelachse G1 erstreckte Gewindespindel 52 eingreift, die also mit ihrem Außengewinde in das korrespondierende Innengewinde der Spindelmutter 51 eingeschraubt ist. Die Spindelachse G1 verläuft im Wesentlichen parallel zur Längsachse L.

Die Spindelmutter 51 ist um die Spindelachse G1 drehbar in einem Lagergehäuse 53 gelagert, welches fest mit der Manteleinheit 4 verbunden ist. In Richtung der Spindelachse G1 ist die Spindelmutter 51 axial über das Lagergehäuse 53 an der Manteleinheit 4 abgestützt.

Die Gewindespindel 52 ist mit einem an ihrem hinteren Ende ausgebildeten Befestigungselement, dem Gelenkkopf 54 über ein Übertragungselement 34 mit der Stelleinheit 3 verbunden, und zwar fest in Richtung der Achse G1 bzw. der Längsachse L und feststehend bezüglich Drehung um die Achse G1. Durch die drehend antreibbare Spindelmutter 51 und die bezüglich Drehung feststehende Gewindespindel 52 wird ein sogenannter Tauchspindelantrieb realisiert.

Das Übertragungselement 34 erstreckt sich von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der Verstellantrieb 5 weist eine Antriebseinheit 55 mit einem elektrischen Stellmotor auf, von dem die Spindelmutter 51 bezüglich der Achse G1 relativ zur feststehenden Gewindespindel 52 drehend antreibbar ist. Dadurch kann - je nach Drehrichtung des Stellmotors - die Gewindespindel 52 in Richtung der Spindelachse G1 translatorisch relativ zur Spindelmutter 51 verlagert werden, so dass entsprechend die mit der Gewindespindel 52 verbundene Stelleinrichtung 3 relativ zu der mit der Spindelmutter 51 verbundenen Manteleinheit 4 in Richtung der Längsachse L verstellt wird.

In Figur 2, welche eine perspektivische Ansicht der Lenksäule 1 von der in Figur 1 hinten liegenden Seite zeigt, ist erkennbar, wie ein zweiter Verstellantrieb 6 zur Verstellung in Höhenrichtung H an der Lenksäule 1 angebracht ist. Dieser Verstellantrieb 6 umfasst eine Spindelmutter 61, in die eine längs ihrer Spindelachse G erstreckte Gewindespindel 62 eingreift. Die Gewindespindel 62 ist in einem Lagergehäuse 63, welches an der Manteleinheit 4 befestigt ist, drehbar um die Achse G gelagert und axial, in Richtung der Spindelachse G, an der Manteleinheit 4 abgestützt, und von einem elektrischen Stellmotor 65 wahlweise in beide Rotationsrichtungen um die Spindelachse G drehend antreibbar.

Die Spindelmutter 61 ist bezüglich einer Drehung um die Achse G feststehend an einem Ende des zweiarmigen Stellhebels 41 angebracht, der um ein Schwenklager 23 drehbar an der Trageinheit 22 gelagert ist, und dessen anderer Arm mit dem anderen Ende mit der Manteleinheit 4 verbunden ist.

Durch Drehung der Gewindespindel 61 kann - je nach Drehrichtung des Stellmotors der Antriebseinheit 65 - die Spindelmutter 61 in Richtung der Spindelachse G translatorisch relativ zur Gewindespindel 62 verlagert werden, so dass entsprechend die über den Stellhebel 41 mit der Spindelmutter 61 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet.

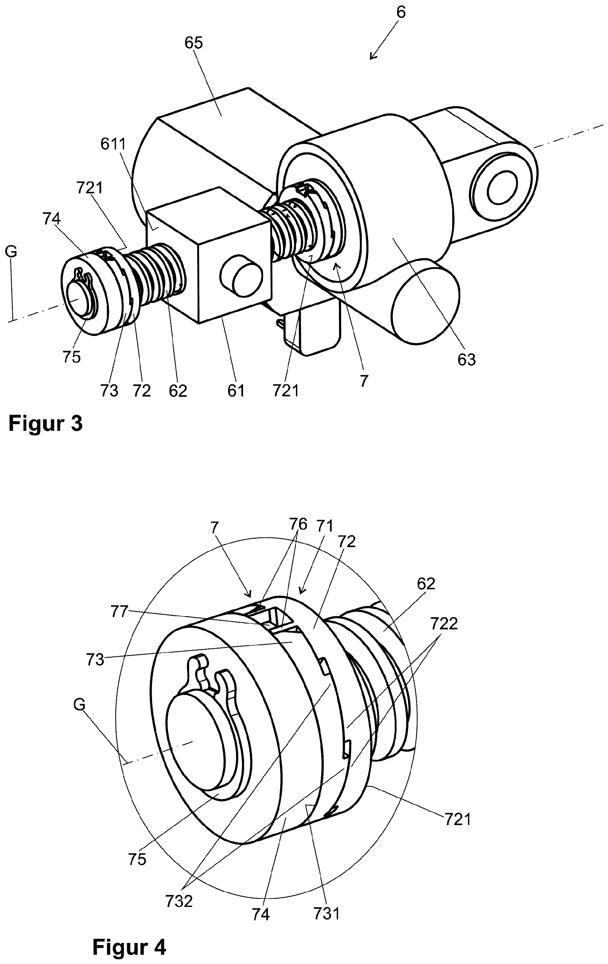

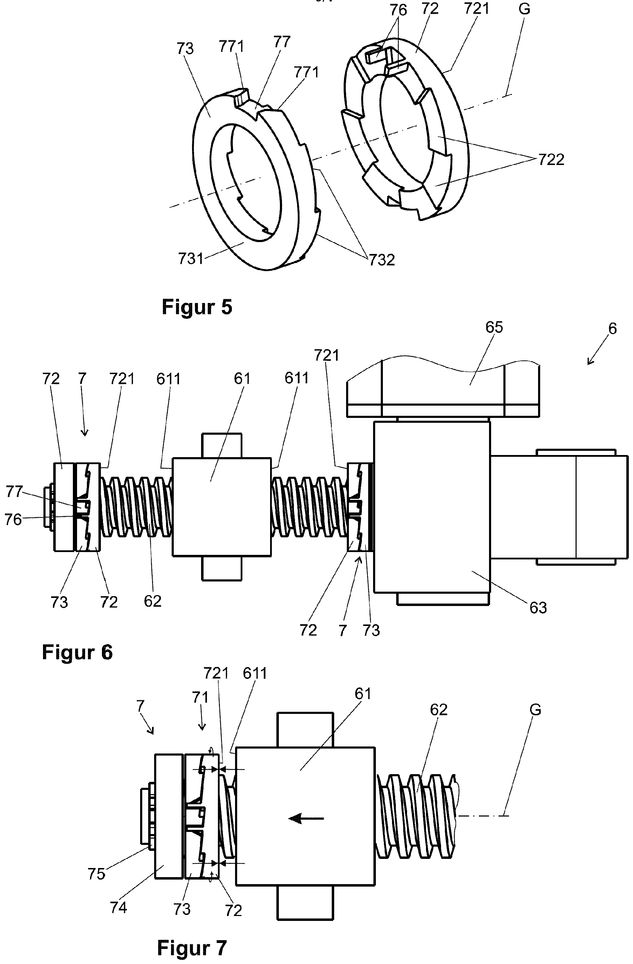

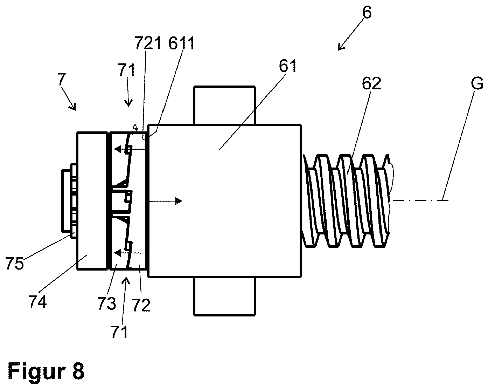

Die Erfindung wird im Folgenden beispielhaft anhand des als Rotationspindelantriebs ausgebildeten Verstellantriebs 6 erläutert, der in Figur 3 einer freigestellten Ansicht perspektivischen Ansicht gezeigt ist, mit einer vergrößerten Detaildarstellung daraus in Figur 4, und in einer Seitenansicht quer zur Spindelachse G in Figur 6, und Details daraus in den Figuren 7 und 8.

Der Verstellantrieb 6 weist insgesamt zwei erfindungsgemäß ausgestaltete und angeordnete Anschlagvorrichtungen 7 auf, wobei die eine Anschlagvorrichtung 7 an dem antriebsfernen, freien Ende der Gewindespindel 62 angeordnet ist, und die andere Anschlagvorrichtung 7 im antriebsnahen Bereich der Antriebseinheit 65 an der Gewindespindel 62 angeordnet ist.

Die am freien Ende der Gewindespindel 62 angeordnete Anschlagvorrichtung 7 ist beispielhaft vergrößert in den Figuren 4, 6, 7 und 8 gezeigt, wobei die andere Anschlagvorrichtung 7 gleichartig aufgebaut sein kann.

Die Anschlagvorrichtung 7 weist eine Abrückvorrichtung 71 auf, welche eine Anschlagscheibe 72 und eine Stützscheibe 73 umfasst. Diese sind beide ringförmig gestaltet und koaxial zur Spindelachse G auf der Gewindespindel 62 angeordnet. Aus der axial - in Richtung der Spindelachse G - auseinander gezogenen Explosionsdarstellung in Figur 5 ist erkennbar, dass die Anschlagscheibe 72 auf ihrer der Stützscheibe 73 abgewandten Stirnseite eine axiale Anschlagfläche 721 aufweist, welche mit ihrer Normalenrichtung axial gegen eine korrespondierende Gegenfläche 611 an der Spindelmutter 61 gerichtet ist. Auf ihrer gegen die Stützscheibe 73 gerichteten Stirnseite weist die Anschlagscheibe 72 gegen die Spindelachse G geneigte Keilflächen 722 auf, die im eingebauten Zustand gegen korrespondierende Keilflächen 732 der Stützscheibe 73 anliegen. Die Keilflächen 722 und 732 sind bezüglich der Spindelachse G entgegengesetzt zur Steigung des Spindelgewindes geneigt. Dadurch wirken sie bezüglich einer relativen Drehung von Anschlagscheibe 72 und Stützscheibe 73 im dargestellten Beispiel wie eine Art Linksgewinde, wenn das Spindelgewinde der Gewindespindel wie dargestellt ein Rechtsgewinde ist. Somit wird ein Hubgetriebe realisiert, welches eine relative Drehung von Anschlagscheibe 72 und Stützscheibe 73 in eine Hubbewegung.

Auf ihrer der Anschlagscheibe 72 abgewandten Seite weist die Stützscheibe 73 eine Stützfläche 731 auf, die axial und drehfest gegen ein Haltestück 74 abgestützt ist, welches über ein Befestigungsmittel 75, beispielsweise einen Sicherungsring, axial und drehfest mit der Gewindespindel 62 verbunden ist, wie in Figur 4 erkennbar ist. Alternativ ist es auch denkbar und möglich, dass Befestigungsmittel einstückig mit der Gewindespindel 62 auszubilden, beispielsweise in dem nach der Montage der Anschlagvorrichtung 72 das Ende der Gewindespindel 62 plastisch deformiert wird oder die Anschlagscheibe 72 auf der Gewindespindel 62 verstemmt wird.

Die Anschlagscheibe 72 weist axial abstehende Federelemente 76 auf, die in Umfangsrichtung elastisch sind, und die in Umfangsrichtung formschlüssig in eine korrespondierende Ausnehmung 77 in der Stützscheibe 73 eingreifen. Die Ausnehmung 77 weist auf der der Anschlagscheibe 72 zugewandten Seite einen mit Fasen 771 versehenden Auslauf auf. Mit anderen Worten erhöht sich die Weite der Ausnehmung 77 in Richtung auf die Anschlagscheibe 72 zu. Dadurch wird eine Rückstellvorrichtung gebildet, welche die Anschlagscheibe 72 und die Stützscheibe 73 relativ zueinander in Position hält, und, falls diese um die Spindelachse G gegeneinander verdreht werden, diese elastisch wieder in die Ruhe- oder Bereitschaftsposition zurückstellen. Diese Bereitschaftsposition ist in den Figuren 3 bis 7 dargestellt, in der keine Anschlagposition vorliegt, also keine der Anschlagflächen 721 eine Gegenfläche 611 kontaktiert.

In Figur 7 befindet sich der Verstellantrieb 6 in einem Verstellzustand außerhalb der Anschlagposition. Die Gewindespindel 62 wird von der Antriebseinheit 65 in einem Drehsinn drehend angetrieben, so dass die Spindelmutter 61 axial auf die Anschlagvorrichtung zu bewegt wird, wie mit dem Pfeil angedeutet. Die Anschlagvorrichtung 7 dreht sich zusammen mit der Gewindespindel 62. Sobald die Gegenfläche 611 beim Erreichen der Anschlagposition axial gegen die Anschlagfläche 721 anschlägt, wird die Anschlagscheibe 72 durch die dann auftretende Reibung mitgenommen und relativ zur Stützscheibe 73 verdreht. Diese relative Drehung von Anschlagscheibe 72 und Stützscheibe 73 wird über die Keilflächen 722 und 732 umgesetzt in eine gegen die Spindelmutter 61 gerichtete lineare Relativbewegung der Anschlagscheibe 72, wie mit den Pfeilen angedeutet. In der Anschlagposition ist die Gegenfläche 611 damit axial gegen die Anschlagfläche 721 verspannt.

Figur 8 zeigt in derselben Ansicht wie Figur 7 den Verstellantrieb 6 in Anschlagposition, in der die Gegenfläche 611 axial gegen die Anschlagfläche 721 anliegt und gegen diese verspannt ist. Beim Lösen wird die Spindelmutter 61 durch relative Drehung von Gewindespindel 62 und Spindelmutter 61 mittels der Antriebseinheit 65 von der Abrückvorrichtung 7 weg bewegt, in Figur 8 nach rechts, wie mit dem Pfeil angedeutet. Zu Beginn dieser Lösebewegung, wenn die Anschlagscheibe 72 über die Anschlagfläche 721 und die dagegen anliegende Gegenfläche 611, zumindest durch Reibschluss, drehschlüssig mit der Spindelmutter 61 gekoppelt ist, wird die Anschlagscheibe 72 mitgenommen und relativ zur Stützscheibe 74 verdreht. Dadurch wird das Hubgetriebe derart betätigt, dass die Anschlagscheibe 72 axial auf die Stützscheibe 73 zu bewegt wird. Dadurch erfolgt aus der Anschlagposition heraus ein Rückhub der Anschlagscheibe 72 relativ zur Spindelmutter 61, wie mit den Pfeilen angedeutet. Dadurch erfolgt ein erfindungsgemäßes Abrücken, bei dem die Anschlagfläche 721 axial von der Gegenfläche 611 getrennt und weg bewegt wird.

Eine beim Abrücken auftretende relative Drehbewegung zwischen der Anschlagscheibe 72 und der Stützscheibe 73 wird durch die Federelemente 76 elastisch zurückgestellt, so dass die unbelastete Bereitschafts- oder Ruheposition wie in Figuren 4 und 7 gezeigt eingenommen wird. In dieser Ruheposition ist die Abrückvorrichtung 61 bereit, einen Anschlag in der vorangehend beschriebenen Weise aufzunehmen.

Die zweite, antriebsseitige Abrückvorrichtung 71 kann spiegelverkehrt angeordnet, aber im Wesentlichen funktionsgleich aufgebaut sein. Dabei ist die Anschlagfläche 721 ebenfalls axial gegen die Spindelmutter 61 gerichtet.

Es ist in abgewandelten Ausführungen möglich, erfindungsgemäße Abrückvorrichtungen 71 auf einer oder beiden Stirnseiten an der Spindelmutter 61 anzubringen, wobei die Anschlagscheibe 72 dann anstelle der Anschlagfläche 721 dann jeweils eine Gegenfläche 611 aufweist. Es ist denkbar und möglich, dass die Anschlagscheibe 72 zusammen mit der Spindelmutter 61 ein einstückiges Bauteil bildet, beispielsweise in dem die Spindelmutter 61 einen Anschlagscheibenabschnitt aufweist und dieses einstückige Bauteil als Kunststoffspritzgussteil ausgebildet ist. Es ist auch denkbar und möglich, eine Abrückvorrichtung 71 an der Gewindespindel 62 und eine an der Spindelmutter 61 vorzusehen. Es kann auch nur eine der gezeigten Abrückvorrichtungen 71 vorgesehen sein.

Der andere, als Tauchspindelantrieb ausgebildete Verstellantrieb 5 kann ebenfalls mindestens eine Abrückvorrichtung 71 aufweisen, die entsprechend an der Spindelmutter 51 und/oder an der Gewindespindel 52 angebracht sein können.

### Bezugszeichenliste

- 1: Lenksäule
- 2: Trageinheit
- 21: Befestigungsmittel
- 22, 23: Schwenklager
- 3: Stelleinheit
- 31: Mantelrohr
- 32: Lenkspindel
- 33: Befestigungsabschnitt
- 34: Übertragungselement
- 4: Manteleinheit
- 41: Stellhebel
- 42: Durchgangsöffnung
- 5, 6: Verstellantrieb
- 51, 61: Spindelmutter
- 52, 62: Gewindespindel
- 53, 63: Lagergehäuse
- 54: Gelenkkopf (Befestigungselement)
- 55, 65: Antriebseinheit (Stellmotor)
- 611: Gegenfläche
- 7: Anschlagvorrichtung
- 71: Abrückvorrichtung
- 72: Anschlagscheibe
- 721: Anschlagfläche
- 722: Keilflächen
- 73: Stützscheibe
- 731: Stützfläche
- 732: Keilflächen
- 74: Haltestück
- 75: Befestigungsmittel
- 76: Federelement
- 77: Ausnehmung

- L: Längsachse
- S: Schwenkachse
- H: Höhenrichtung
- G: Spindelachse

## Patentansprüche

1. Verstellantrieb (5, 6) für eine Lenksäule (1) für ein Kraftfahrzeug, umfassend eine in Richtung einer Spindelachse (G) axial längs erstreckte Gewindespindel (52, 62), die in eine Spindelmutter (51,61) eingreift, und eine Antriebseinheit (55, 65), die mit der Gewindespindel (52, 62) oder der Spindelmutter (51, 61) derart gekoppelt ist, dass die Gewindespindel (52, 62) und die Spindelmutter (51, 61) relativ zueinander drehend antreibbar sind, wobei eine Anschlagvorrichtung (7) zur Begrenzung einer axialen Bewegung der Spindelmutter (51, 61) relativ zur Gewindespindel (52, 62) mindestens eine in axialer Richtung an der Gewindespindel (51, 61) abgestützte Anschlagfläche (721) aufweist, und eine axial dagegen gerichtete, an der Spindelmutter (51, 61) abgestützte Gegenfläche (611),
**dadurch gekennzeichnet,**
**dass** die Anschlagvorrichtung (7) eine Abrückvorrichtung (71) aufweist, wobei die Abrückvorrichtung (71) die Anschlagfläche (721) aufweist und diese über die Abrückvorrichtung (71) in axialer Richtung verstellbar gegen die Gewindespindel (62) abgestützt ist, und/oder die Abrückvorrichtung (71) die Gegenfläche (611) aufweist, die über die Abrückvorrichtung (71) in axialer Richtung verstellbar gegen die Spindelmutter (61) abgestützt ist.

2. Verstellantrieb nach Anspruch 1, **dadurch gekennzeichnet, dass** an der Gewindespindel (52, 62) ein Stützelement (74) axial fixiert ist, gegen das die Abrückvorrichtung (7) abgestützt ist oder das die Anschlagfläche (721) aufweist.

3. Verstellantrieb nach Anspruch 1 oder 2, **dadurch gekennzeichnet, dass** die Abrückvorrichtung (7) ein Umlenkgetriebe (722, 732) aufweist.

4. Verstellantrieb nach Anspruch 3, **dadurch gekennzeichnet, dass** das Umlenkgetriebe (722, 732) ausgestaltet ist zur Umsetzung einer relativen Drehung der Anschlagfläche (721) und/oder der Gegenfläche (611) um die Spindelachse (G) in eine axiale Abrückbewegung.

5. Verstellantrieb nach Anspruch 4, **dadurch gekennzeichnet, dass** das Umlenkgetriebe (722, 723) eine der Gewindesteigung der Gewindespindel (62) entgegengesetzte Umlenkrichtung bezüglich der Umlenkung einer rotatorischen in eine lineare Bewegungsrichtung hat.

6. Verstellantrieb nach einem der vorangehenden Ansprüche 3 bis 5, **dadurch gekennzeichnet, dass** die Abrückvorrichtung (7) eine Anschlagscheibe (72) und eine Stützscheibe (73) aufweist, die relativ zur Spindelachse (G) gegeneinander verdrehbar sind und miteinander zusammenwirkende Getriebemittel (722, 732) aufweisen.

7. Verstellantrieb nach Anspruch 6, **dadurch gekennzeichnet, dass** die Anschlagscheibe (72) und die Stützscheibe (73) miteinander korrespondierende Keilflächen (722, 732), Nocken und/oder Gewindeflächen aufweisen.

8. Verstellantrieb nach Anspruch 6 oder 7, **dadurch gekennzeichnet, dass** zwischen der Anschlagscheibe (72) und der Stützscheibe (73) Wälzkörper oder Kippelemente angeordnet sind.

9. Verstellantrieb nach einem der vorangehenden Ansprüche, **dadurch gekennzeichnet, dass** die Abrückvorrichtung (7) eine Rückstellvorrichtung (76, 77) aufweist, welche die Anschlagfläche (721) oder die Gegenfläche (611) in einer definierten relativen Anschlagposition hält, und bei Abweichungen von der Anschlagposition eine auf die Anschlagposition gerichtete Rückstellkraft ausübt.

10. Verstellantrieb nach Anspruch 8, **dadurch gekennzeichnet, dass** die Rückstellvorrichtung (76, 77) mindestens ein Federelement (76) aufweist.

11. Verstellantrieb nach einem der vorangehenden Ansprüche, **dadurch gekennzeichnet, dass** die Anschlagfläche (721) und/oder die Gegenfläche (611) Reib- und/oder Formschlussmittel aufweisen.

12. Verstellantrieb nach einem der vorangehenden Ansprüche, **dadurch gekennzeichnet, dass** er als Rotationsspindelantrieb ausgebildet ist oder dass er als Tauchspindelantrieb ausgebildet ist.

13. Motorisch verstellbare Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (32) um eine Längsachse (L) drehbar gelagert ist,
und mit einem Verstellantrieb (5, 6), umfassend eine in Richtung einer Spindelachse (G) axial längs erstreckte Gewindespindel (52, 62), die in eine Spindelmutter (51, 61) eingreift, und eine Antriebseinheit (55, 65), die mit der Gewindespindel (52, 62) oder der Spindelmutter (51, 61) derart gekoppelt ist, dass die Gewindespindel (52, 62) und die Spindelmutter (51, 61) relativ zueinander drehend antreibbar sind, wobei eine Anschlagvorrichtung (7) zur Begrenzung einer axialen Bewegung der Spindelmutter (51, 61) relativ zur Gewindespindel (52, 62) mindestens eine in axialer Richtung an der Gewindespindel (52, 62) abgestützte Anschlagfläche (721) aufweist, und eine axial dagegen gerichtete, an der Spindelmutter (51, 61) abgestützte Gegenfläche (611),
**dadurch gekennzeichnet,**
**dass** der Verstellantrieb (5, 6) ausgebildet ist nach einem der Ansprüche 1 bis 12.

14. Lenksäule nach Anspruch 12, **dadurch gekennzeichnet, dass** ein Verstellantrieb (5, 6) als Längsverstellantrieb (5) und/oder als Höhenverstellantrieb (6) vorgesehen ist.

## Claims

1. Adjustment drive (5, 6) for a steering column (1) for a motor vehicle, comprising a threaded spindle (52, 62) which extends axially longitudinally in the direction of a spindle axis (G) and engages in a spindle nut (51, 61), and a drive unit (55, 65) which is coupled to the threaded spindle (52, 62) or the spindle nut (51, 61) in such a way that the threaded spindle (52, 62) and the spindle nut (51, 61) can be driven in rotation relative to one another, wherein a stop device (7) for limiting an axial movement of the spindle nut (51, 61) relative to the threaded spindle (52, 62) having at least one stop surface (721) supported in the axial direction on the threaded spindle (51, 61), and a mating surface (611) directed axially against the stop surface (721), and supported on the spindle nut (51, 61),
**characterized in**
**that** the stop device (7) has a disengaging device (71), the disengaging device (71) having the stop surface (721) and the latter being supported against the threaded spindle (62) via the disengaging device (71) such that it can be adjusted in the axial direction, and/or the disengaging device (71) having the mating surface (611) which is supported against the spindle nut (61) via the disengaging device (71) such that it can be adjusted in the axial direction.

2. Adjustment drive according to claim 1, **characterized in that** a support element (74) is axially fixed to the threaded spindle (52, 62), against which the disengaging device (7) is supported or which has the stop surface (721).

3. Adjustment drive according to claim 1 or 2, **characterized in that** the disengaging device (7) has a reversing gear (722, 732).

4. Adjustment drive according to claim 3, **characterized in that** the deflection gear (722, 732) is designed for converting a relative rotation of the stop surface (721) and/or the mating surface (611) about the spindle axis (G) into an axial withdrawal movement.

5. Adjustment drive according to claim 4, **characterized in that** the deflection gear (722, 723) has a deflection direction opposite to the thread pitch of the threaded spindle (62) with respect to the deflection of a rotational into a linear direction of movement.

6. Adjustment drive according to any one of the preceding claims 3 to 5, **characterized in that** the disengaging device (7) comprises a stop disc (72) and a support disc (73) which are rotatable relative to the spindle axis (G) with respect to one another and have gearing means (722, 732) cooperating with one another.

7. Adjustment drive of claim 6, **characterized in that** the stop disk (72) and the support disk (73) have corresponding wedge surfaces (722, 732), cams and/or threaded surfaces.

8. Adjustment drive according to claim 6 or 7, **characterized in that** rolling elements or tilting elements are arranged between the stop disc (72) and the support disc (73).

9. Adjustment drive according to one of the preceding claims, **characterized in that** the disengaging device (7) has a resetting device (76, 77) which holds the stop surface (721) or the mating surface (611) in a defined relative stop position and, in the event of deviations from the stop position, exerts a resetting force directed towards the stop position.

10. Adjustment drive according to claim 8, **characterized in that** the resetting device (76, 77) comprises at least one spring element (76).

11. Adjustment drive according to one of the preceding claims, **characterized in that** the stop surface (721) and/or the mating surface (611) have frictional and/or form-fit means.

12. Adjustment drive according to one of the preceding claims, **characterized in that** it is designed as a rotary spindle drive or **in that** it is designed as a submerged spindle drive.

13. Motor-adjustable steering column (1) for a motor vehicle, having a support unit (2) which can be attached to a vehicle body and by which an adjustment unit (3) is held, in which an adjusting spindle (32) is mounted so as to be rotatable about a longitudinal axis (L)
and with an adjustment drive (5, 6), comprising a threaded spindle (52, 62) which extends axially longitudinally in the direction of a spindle axis (G) and engages in a spindle nut (51, 61), and a drive unit (55, 65) which is coupled to the threaded spindle (52, 62) or the spindle nut (51, 61) in such a way that the threaded spindle (52, 62) and the spindle nut (51, 61) can be driven in rotation relative to one another, a stop device (7) for limiting an axial movement of the spindle nut (51, 61) relative to the threaded spindle (52, 62) having at least one stop surface (721) supported in the axial direction on the threaded spindle (52, 62), and a mating surface (611) supported on the spindle nut (51, 61) and directed axially in opposition thereto,
**characterized in**
**that** the adjusting drive (5, 6) is designed according to one of the claims 1 to 12.

14. Steering column according to claim 12, **characterized in that** an adjustment drive (5, 6) is provided as a longitudinal adjustment drive (5) and/or as a height adjustment drive (6).

## Revendications

1. Dispositif de réglage (5, 6) pour une colonne de direction (1) d'un véhicule automobile, comprenant une tige filetée (52, 62) qui s'étend axialement longitudinalement en direction d'un axe de broche (G) et s'engage dans un écrou de broche (51, 61), et une unité d'entraînement (55, 65) qui est couplée à la tige filetée (52, 62) ou à l'écrou de broche (51, 61) de manière à ce que la tige filetée (52, 62) et l'écrou de broche (51, 61) puissent être entraînés en rotation l'un par rapport à l'autre, dans lequel un dispositif d'arrêt (7) pour limiter un mouvement axial de l'écrou de la broche (51, 61) par rapport à la broche filetée (52, 62) comporte au moins une surface d'arrêt (721) supportée dans la direction axiale sur la broche filetée (51, 61), et une surface d'accouplement (611) dirigée axialement contre la surface d'arrêt (721), et supportée sur l'écrou de la broche (51, 61),
**caractérisé par**
le dispositif d'arrêt (7) comporte un dispositif de débrayage (71), le dispositif de débrayage (71) ayant la surface de butée (721) et cette dernière étant appuyée contre la broche filetée (62) par l'intermédiaire du dispositif de débrayage (71) de manière à pouvoir être réglée dans la direction axiale, et/ou le dispositif de débrayage (71) ayant la surface d'accouplement (611) qui est appuyée contre l'écrou de la broche (61) par l'intermédiaire du dispositif de débrayage (71) de manière à pouvoir être réglée dans la direction axiale.

2. Entraînement de réglage selon la revendication 1, **caractérisé par le fait qu'**un élément de support (74) est fixé axialement à la broche filetée (52, 62), contre laquelle le dispositif de débrayage (7) est appuyé ou qui présente la surface de butée (721).

3. Entraînement de réglage selon la revendication 1 ou 2, **caractérisé par le fait que** le dispositif de débrayage (7) comporte un engrenage inverseur (722, 732).

4. Entraînement de réglage selon la revendication 3, **caractérisé par le fait que** le renvoi (722, 732) est conçu pour convertir une rotation relative de la surface de butée (721) et/ou de la surface de contact (611) autour de l'axe de la broche (G) en un mouvement de retrait axial.

5. Entraînement de réglage selon la revendication 4, **caractérisé par le fait que** le pignon de renvoi (722, 723) a une direction de renvoi opposée au pas de filetage de la broche filetée (62) en ce qui concerne le renvoi d'une direction de rotation en une direction de mouvement linéaire.

6. Entraînement de réglage selon l'une quelconque des revendications précédentes 3 à 5, **caractérisé en ce que** le dispositif de débrayage (7) comprend un disque de butée (72) et un disque d'appui (73) qui sont rotatifs par rapport à l'axe de la broche (G) l'un par rapport à l'autre et comportent des moyens d'engrenage (722, 732) coopérant l'un avec l'autre.

7. Entraînement de réglage selon la revendication 6, **caractérisé par le fait que** le disque de butée (72) et le disque de support (73) ont des surfaces de calage (722, 732), des cames et/ou des surfaces filetées correspondantes.

8. Entraînement de réglage selon la revendication 6 ou 7, **caractérisé par le fait que** des éléments de roulement ou de basculement sont disposés entre le disque de butée (72) et le disque de support (73).

9. Entraînement de réglage selon l'une des revendications précédentes, **caractérisé par le fait que** le dispositif de débrayage (7) comporte un dispositif de réarmement (76, 77) qui maintient la surface de butée (721) ou la surface de contact (611) dans une position de butée relative définie et qui, en cas d'écart par rapport à la position de butée, exerce une force de réarmement dirigée vers la position de butée.

10. Entraînement de réglage selon la revendication 8, **caractérisé par le fait que** le dispositif de remise à zéro (76, 77) comprend au moins un élément à ressort (76).

11. Entraînement de réglage selon l'une des revendications précédentes, **caractérisé par le fait que** la surface de butée (721) et/ou la surface d'accouplement (611) présentent des moyens de friction et/ou de mise en forme.

12. Entraînement de réglage selon l'une des revendications précédentes, **caractérisé en ce qu'**il est conçu comme un entraînement de broche rotative ou **en ce qu'**il est conçu comme un entraînement de broche immergée.

13. Colonne de direction à réglage motorisé (1) pour un véhicule automobile, comportant une unité de support (2) qui peut être fixée à la carrosserie du véhicule et par laquelle une unité de réglage (3) est maintenue, dans laquelle une broche de réglage (32) est montée de manière à pouvoir tourner autour d'un axe longitudinal (L)
et avec un entraînement de réglage (5, 6), comprenant une broche filetée (52, 62) qui s'étend axialement longitudinalement en direction d'un axe de broche (G) et s'engage dans un écrou de broche (51, 61), et une unité d'entraînement (55, 65) qui est couplée à la broche filetée (52, 62) ou à l'écrou de broche (51, 61) de manière à ce que la broche filetée (52, 62) et l'écrou de broche (51, 61) puissent être entraînés en rotation l'un par rapport à l'autre, un dispositif d'arrêt (7) pour limiter un mouvement axial de l'écrou de la broche (51, 61) par rapport à la broche filetée (52, 62) ayant au moins une surface d'arrêt (721) supportée dans la direction axiale sur la broche filetée (52, 62), et une surface d'accouplement (611) supportée sur l'écrou de la broche (51, 61) et dirigée axialement en opposition à celui-ci,
**caractérisé par le fait que**
l'entraînement de réglage (5, 6) est conçu selon l'une des revendications 1 à 12.

14. Colonne de direction selon la revendication 12, **caractérisée par le fait qu'**une commande de réglage (5, 6) est prévue comme commande de réglage longitudinal (5) et/ou comme commande de réglage en hauteur (6).
